# EUROPEAN PATENT APPLICATION

(11) **EP 4 282 242 A2**
(43) Date of publication of application: **29.11.2023**
(21) Application number: 23167439.1
(22) Date of filing: 11.04.2023
(51) Int. Cl.: A01B 76/00

(54) **WORK METHOD, WORK VEHICLE AND WORK SYSTEM**

(30) Priority: 26.04.2022 JP 2022072291
(71) Applicant: Yanmar Holdings Co., Ltd., Osaka-shi, Osaka (JP)
(72) Inventor: UENO, So, Okayama (JP); MIWA, Toshiyuki, Okayama (JP)
(74) Representative: Novagraaf International SA

(57) **Abstract**

[Problem] To provide a work method, a work vehicle, and a work system capable of presenting a work machine state of a work machine and a status of work performed by the work machine to an operator in a manner that is easily understood.

[Solution] This tractor 1 includes a work machine 3, a control device 13, and an imaging unit 28. The control device 13 operates as a work machine state detection unit 47 and a display control unit 48. The work machine state detection unit 47 detects a work machine state relating to the work machine 3. The imaging unit 28 acquires a work image 74 by imaging the status of work performed by the work machine 3. The display control unit 48 displays simultaneously on a display device 14 a first display area 61 that displays the detected work machine state, and a second display area 62 that displays the acquired work image 74.

## Description

### TECHNICAL FIELD

The present invention relates to a work method for performing work travel of a work vehicle, a work vehicle, and a work system.

### BACKGROUND ART

A work vehicle such as a tractor is configured to perform work travel, in which work is performed by a work machine while traveling in a field. A work vehicle is required to detect the state of a work machine (work machine state) during work with a sensor or the like, and control the travel by the work vehicle and the work performed by the work machine based on the detection result.

For example, the agricultural work machine disclosed in Patent Document 1 includes a detection unit that detects at least one of surrounding area information and state information of the agricultural work machine, and a control unit that transmits a signal to a traveling vehicle control unit based on the detection of the detection unit.

### PRIOR ART DOCUMENT

### PATENT DOCUMENT

Patent Document 1: Japanese Unexamined Patent Application Publication No. 2020-092612

### SUMMARY OF INVENTION

### TECHNICAL PROBLEM

In the agricultural work machine of Patent Document 1, although it is possible to detect surrounding area information and state information of the agricultural work machine, in the conventional technique, it is not possible to present the work machine state of the work machine and the status of work performed by the work machine to an operator in a manner that is easily understood. Consequently, when an operator operates the work machine, it is difficult to perform an operation that matches the work machine state of the work machine and the status of work performed by the work machine.

An object of the present invention is to provide a work method, a work vehicle, and a work system that are capable of presenting a work machine state of a work machine and a status of work performed by the work machine to an operator in a manner that is easily understood.

### SOLUTION TO PROBLEM

In order to solve the problem described above, a work method of the present invention is a work method of a work vehicle provided with a work machine, comprising: a detection step for detecting a work machine state relating to the work machine; an imaging step for imaging a status of work performed by the work machine, and acquiring a work image; and a display step for displaying simultaneously a first display area that displays the detected work machine state, and a second display area that displays the acquired work image.

Furthermore, in order to solve the problem described above, a work vehicle of the present invention is a work vehicle provided with a work machine, comprising: a detection unit that detects a work machine state relating to the work machine; an imaging unit that images a status of work performed by the work machine, and acquires a work image; and a display control unit that displays simultaneously on a display device a first display area that displays the detected work machine state, and a second display area that displays the acquired work image.

Moreover, in order to solve the problem described above, a work system of the present invention is a work system of a work vehicle provided with a work machine, comprising: a detection unit that detects a work machine state relating to the work machine; an imaging unit that images a status of work performed by the work machine, and acquires a work image; and a display control unit that displays simultaneously on a display device a first display area that displays the detected work machine state, and a second display area that displays the acquired work image.

### ADVANTAGEOUS EFFECTS OF INVENTION

According to the present invention, a work method, a work vehicle, and a work system are provided that are capable of presenting a work machine state of a work machine and a status of work performed by the work machine to an operator in a manner that is easily understood.

### BRIEF DESCRIPTION OF DRAWINGS

FIG. 1 is a side view of a tractor according to an embodiment of the present invention.
FIG. 2 is a rear view of a tractor according to an embodiment of the present invention when the work machine is in an open state.
FIG. 3 is a rear view of a tractor according to an embodiment of the present invention when the work machine is in a closed state.
FIG. 4 is a block diagram of a tractor according to an embodiment of the present invention.
FIG. 5 is a plan view showing an example of a state confirmation screen displayed on the display device of a tractor according to an embodiment of the present invention.
FIG. 6 is a plan view showing an example where, as the state confirmation screen displayed on the display device of a tractor according to an embodiment of the present invention, the tilt meter is displaced to the right side, and the depth meter is displaced to the lower side.
FIG. 7 is a plan view showing an example where, as the state confirmation screen displayed on the display device of a tractor according to an embodiment of the present invention, the tilt meter is displaced to the left side, and the depth meter is displaced to the upper side.
FIG. 8 is a side view of a tractor according to another example of an embodiment of the present invention.
FIG. 9 is a block diagram of a tractor according to another example of an embodiment of the present invention.
FIG. 10 is a plan view showing an example of a state confirmation screen displayed on the display device of a tractor according to another example of an embodiment of the present invention.

### DESCRIPTION OF EMBODIMENTS

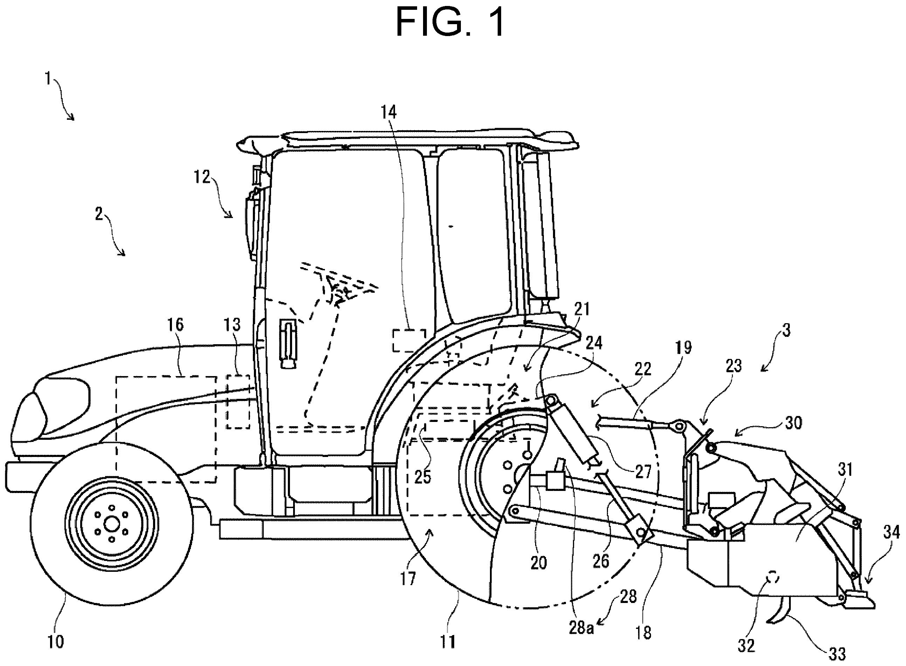

A work vehicle of the present invention performs work travel in which work is performed by a work machine while traveling in a field. A tractor 1, which is an embodiment of a work vehicle of the present invention, will be described with reference to the drawings. As shown in FIG. 1, FIG. 2 and FIG. 3, the tractor 1 includes a vehicle body 2 and a work machine 3, and is configured to travel due to the vehicle body 2 while the work machine 3 performs work such as tilling. In the tractor 1, the work machine 3 such as a rotary, harrow, loader, plow, or box scraper that performs various types of work is mounted as necessary on the vehicle body 2. In the present embodiment, as shown in FIG. 1, FIG. 2 and FIG. 3, an example will be described in which a plowing harrow is mounted on the vehicle body 2 as the work machine 3.

The tractor 1 has a travel mode which is set to either a manual travel mode or an autonomous travel mode. When the manual travel mode is set, the tractor 1 performs manual travel according to the operations of various operation tools (a steering wheel, an accelerator pedal, and a shift lever) performed by an operator. When the autonomous travel mode is set, the tractor 1 controls the vehicle speed, the steering, and the like using a control device 13 so as to autonomously travel along an autonomous travel route that has been set.

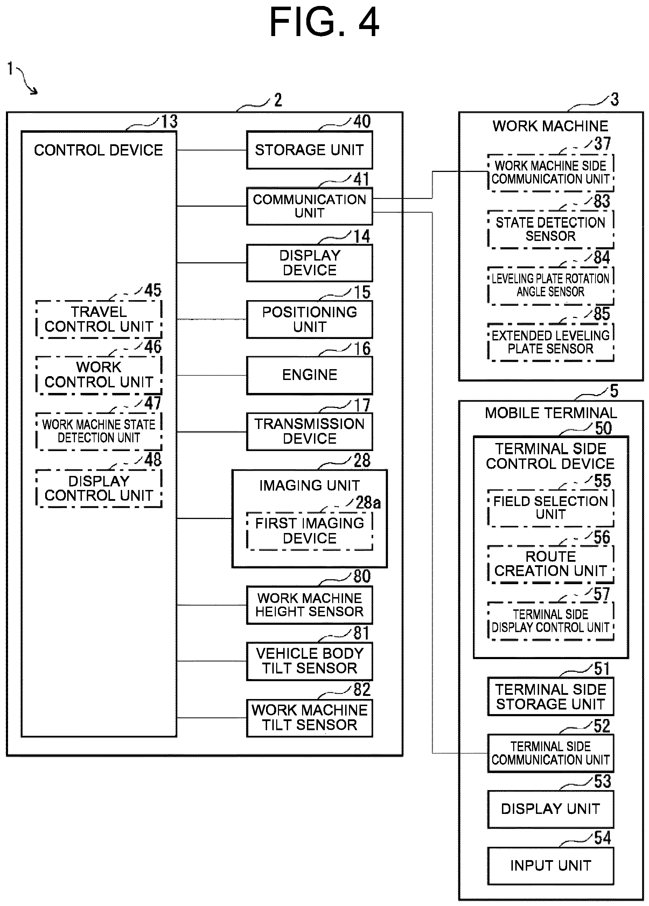

A pair of left and right front wheels 10 is provided on the lower front portion of the vehicle body 2. A pair of left and right rear wheels 11 is provided on the lower rear portion of the vehicle body 2. A cabin 12 for an operator to board is provided on the upper portion of the vehicle body 2. A driver's seat and various operating tools are provided inside the cabin 12. Furthermore, the vehicle body 2 is provided with a control device 13, a display device 14, and a positioning unit 15 (see FIG. 4). The display device 14 includes a touch panel, a monitor, or the like, and is arranged inside the cabin 12. An engine 16 is built into the front portion of the vehicle body 2. A transmission device 17 is provided between the pair of left and right rear wheels 11. The power of the engine 16 is changed by the transmission device 17 and is transmitted to the front wheels 10 and the rear wheels 11.

A pair of left and right lower links 18, a top link 19, and a PTO shaft 20 are connected to the rear portion of the transmission device 17. The lower links 18, the top link 19, and the PTO shaft 20 are arranged so as to extend backward. The work machine 3 is connected to the rear ends of the lower links 18, the top link 19, and the PTO shaft 20, and is driven by the PTO shaft 20.

The rear portion of the vehicle body 2 is provided with a work machine lifting mechanism 21, a work machine angle changing mechanism 22, and a joint member 23.

The work machine lifting mechanism 21 includes a pair of left and right lift arms 24 and a lift cylinder (work machine lifting portion) 25 configured by a hydraulic cylinder. The front end portion of one lift arm 24 is joined to one lower link 18 via a link member 26. The front end portion of the other lift arm 24 is joined to the other lower link 18 via a rolling cylinder 27. The work machine lifting mechanism 21 is capable of changing the height of the work machine 3 supported by the vehicle body 2 by driving the lift cylinder 25.

As shown in FIG. 4, the vehicle body 2 includes, as sensors that detect the work machine state of the work machine 3, a work machine height sensor 80 that detects the height of the work machine 3, a vehicle body tilt sensor 81 that detects the tilt of the vehicle body 2 with respect to the horizontal direction, and a work machine tilt sensor 82 that detects the tilt of the work machine 3 with respect to the vehicle body 2. The work machine height sensor 80 is configured by a sensor that, for example, detects the position of the cylinder rod of the lift cylinder 25 (the length of the lift cylinder 25).

The work machine angle changing mechanism 22 includes a rolling cylinder 27 configured by a hydraulic cylinder. As described above, the rolling cylinder 27 is configured so as to join the other lift arm 24 and the other lower link 18. As a result of driving the rolling cylinder 27, the work machine angle changing mechanism 22 is capable of changing the tilt posture in the left-right direction of the work machine 3, which is supported by the vehicle body 2.

The joint member 23 is configured so as to join the lower link 18, the top link 19, and the work machine 3.

The work machine 3 is configured by a plowing harrow that performs plowing work for crushing soil clods and flattening the surface of a rice paddy (field) filled with water. As shown in FIG. 1, the work machine 3 includes a joint portion 30 for joining the work machine 3 to the joint member 23 of the vehicle body 2. The joint portion 30 may be configured so as to join the lower link 18, the top link 19, and the work machine 3 without the joint member 23 between them.

A tillage cover 31 extending in the left-right direction is provided behind the joint portion 30. A tillage rotating shaft 32 having a rotating shaft extending in the left-right direction is rotatably attached to the tillage cover 31. The tillage rotating shaft 32 is rotated by the power transmitted from the PTO shaft 20. A plurality of tillage claws 33 are provided on the tillage rotating shaft 32, which are provided spaced apart in the left-right direction. As a result of the tillage rotating shaft 32 and the tillage claws 33 rotating together to till the soil of the rice paddy (field), the soil clods of the rice paddy can be crushed.

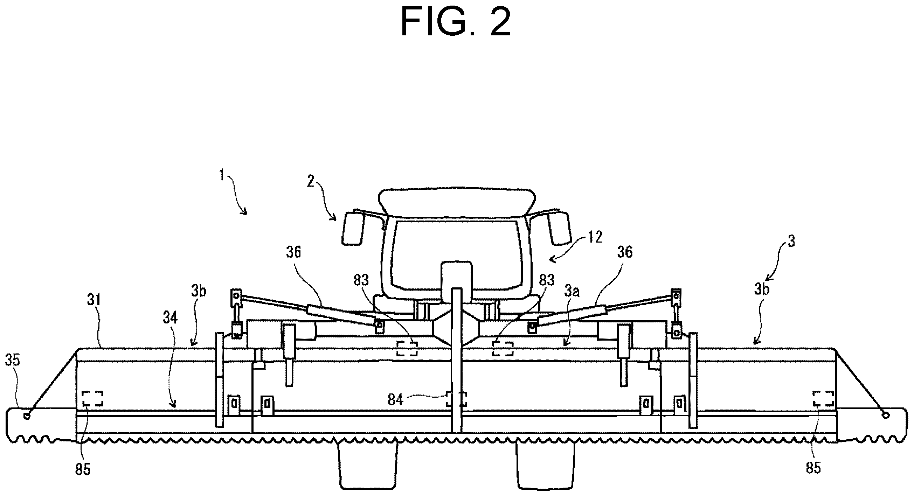

A leveling plate 34 extending in the left-right direction is provided on the lower rear portion of the tillage cover 31. The leveling plate 34 has a rotating shaft extending in the left-right direction, and is rotatably attached to the tillage cover 31. The leveling plate 34 is downwardly biased and pressurized by a biasing member such as a hydraulic cylinder or an electric motor, and is capable of flattening the field surface by making contact with the soil surface of the rice paddy (field). Left and right extended leveling plates 35 (see FIG. 2) that widen the leveling width may be provided outside the leveling plate 34 in the left-right direction. The left and right extended leveling plates 35 are attached so as to be rotatable with respect to both the left and right ends of the leveling plate 34. The left and right extended leveling plates 35 can be switched between an expanded state, in which they are expanded to the left and right of the leveling plate 34, and a stored state, in which they are folded with respect to the leveling plate 34. The switching of the extended leveling plates 35 between the expanded state and the stored state may be performed manually, or automatically via an actuator.

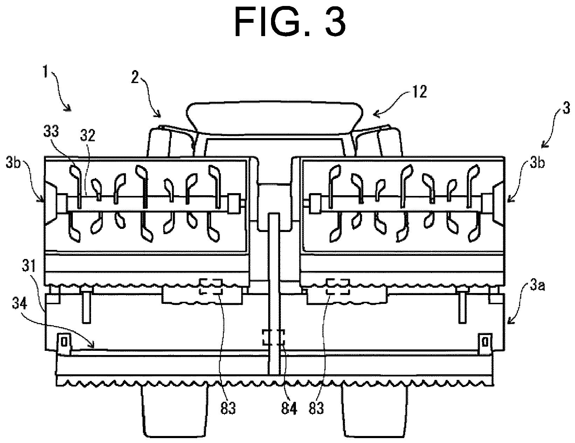

As shown in FIG. 2 and FIG. 3, the work machine 3 is configured so as to be capable of opening and closing. Specifically, the work machine 3 has a central tillage unit 3a, and left and right side tillage units 3b that are rotatably attached to the central tillage unit 3a via rotating shaft members provided on both the left and right ends of the central tillage unit 3a. In other words, the side tillage units 3b are provided so as to be capable of opening and closing with respect to the central tillage unit 3a. The central tillage unit 3a and the left and right side tillage units 3b are each configured by a tillage cover 31, a tillage rotating shaft 32, tillage claws 33, and a leveling plate 34.

By expanding and extending the left side tillage unit 3b to the left of the central tillage unit 3a, the left side tillage unit 3b is switched to the open state. On the other hand, by upwardly folding the left side tillage unit 3b with respect to the central tillage unit 3a, the left side tillage unit 3b is switched to the closed state. Similarly, by expanding and extending the right side tillage unit 3b to the right of the central tillage unit 3a, the right side tillage unit 3b is switched to the open state. On the other hand, by upwardly folding the right side tillage unit 3b with respect to the central tillage unit 3a, the right side tillage unit 3b is switched to the closed state. The central tillage unit 3a and the left and right side tillage units 3b are each connected via left and right opening-closing cylinders 36. As a result of extending and retracting the opening-closing cylinders 36, it is possible to switch the side tillage units 3b between the open state and the closed state.

Furthermore, the work machine 3 includes, as sensors that detect the work machine state of the work machine 3, a state detection sensor 83, a leveling plate rotation angle sensor 84, and an extended leveling plate sensor 85. The state detection sensor 83 is a sensor that detects whether the left and right side tillage units 3b are each in the open state or the closed state. For example, the state detection sensor 83 is configured by limit switches that individually detect the closed state of each side tillage unit 3b by making contact and energizing with each side tillage unit 3b that has switched to the closed state. Alternatively, the state detection sensor 83 may be a sensor that detects the rotation angle of the rotating shaft of each side tillage unit 3b, or a sensor that detects the elongation length of the opening-closing cylinders 36. The leveling plate rotation angle sensor 84 detects the rotation angle of the leveling plate 34 in the up-down direction during leveling, and is configured, for example, by a potentiometer that detects the rotation angle of the leveling plate 34 or the rotation angle of a link attached to the rotating shaft of the leveling plate 34. The extended leveling plate sensor 85 is a sensor that detects whether the left and right extended leveling plates 35 are each in the expanded state or the stored state.

The positioning unit 15 is configured to acquire position information (positioning point) of the tractor 1 using a satellite positioning system such as a GNSS. The positioning unit 15 receives a positioning signal from a positioning satellite via a positioning antenna, and acquires position information of the positioning unit 15, that is, position information of the tractor 1 based on the positioning signal.

Furthermore, vehicle body 2 is provided with an imaging unit 28 that images the status of work (finish level of plowing work) performed by the work machine 3. For example, the imaging unit 28 is provided on a PTO shaft cover that covers the PTO shaft 20, and includes a first imaging device 28a that images the status of work performed by the work machine 3 from the front and at a closer distance. The first imaging device 28a simultaneously images, inside the angle of view, both the left and right ends of the work machine 3 and the surrounding area of the soil on which the work machine 3 is performing work. The first imaging device 28a may be provided having the imaging direction oriented toward the lower-rear direction from the upper portion of the PTO shaft cover. However, the imaging direction may also be controlled by the control device 13.

Next, the control device 13 will be described. The control device 13 is configured by a computer such as a CPU, and as shown in FIG. 4, is connected to a storage unit 40 such as a ROM, a RAM, a hard disk drive, or a flash memory, and to a communication unit 41 that communicates with an external instrument.

The storage unit 40 stores a program and data for controlling various components and various functions of the tractor 1. As a result of the control device 13 executing arithmetic processing based on the program and the data stored in the storage unit 40, the various components and the various functions are controlled. The control device 13 acquires, for example, an own vehicle position of the tractor 1 from the positioning unit 15.

Furthermore, the storage unit 40 stores field information and an autonomous travel route of a field, which is the work target of the tractor 1. The control device 13 receives the field information and the autonomous travel route from a mobile terminal 5 via the communication unit 41, and stores them in the storage unit 40. The field information includes, for example, information such as the shape, size, and position information (coordinates and the like) of the field outline, the shape, size, and position information (coordinates and the like) of an unworked region in the field in which work travel has not yet been performed, and an already-worked region in the field in which work travel has already been performed.

The communication unit 41 has a function that performs communication processing with a work machine side communication unit 37 (see FIG. 4) provided in the work machine 3 through wired communication or wireless communication. Furthermore, the communication unit 41 has a function that performs communication processing with an external device, such as the mobile terminal 5 held by an operator, through wireless communication. The control device 13 controls the communication unit 41 to communicate with the work machine 3 and the mobile terminal 5, and transmits and receives various information to and from the work machine 3 and the mobile terminal 5.

The control device 13 is connected to various sensors provided in the vehicle body 2 to input the detection results of the various sensors, and also inputs the detection results of the various sensors provided in the work machine 3 via the communication unit 41. The control device 13 is connected to the imaging unit 28 provided in the vehicle body 2, controls the imaging unit 28 while the work machine 3 is in operation, and inputs the images captured by the imaging unit 28 at predetermined time intervals.

As a result of executing the program stored in the storage unit 40, the control device 13 operates as a travel control unit 45, a work control unit 46, a work machine state detection unit 47 (detection unit), and a display control unit 48. The work machine state detection unit 47 and the display control unit 48 each realize the detection step and the display step of the work method according to the present invention. Furthermore, the imaging unit 28 realizes the imaging step of the work method according to the present invention.

The travel control unit 45 controls the travel of the tractor 1. For example, when the manual travel mode is set, the travel control unit 45 controls the engine 16, the transmission device 17, and the steering device (not illustrated) according to the operation of various operation tools provided in the cabin 12. As a result, the vehicle speed and steering of the tractor 1 are controlled.

Furthermore, when the autonomous travel mode is set, the travel control unit 45 acquires the autonomous travel route set with respect to the field from the mobile terminal 5 or the like, and acquires the own vehicle position of the tractor 1 from the positioning unit 15. Then, based on the own vehicle position and the autonomous travel route, the travel control unit 45 controls the steering of the tractor 1 such that the tractor 1 performs autonomous travel along the autonomous travel route. In addition, the travel control unit 45 controls the engine 16 and the transmission device 17 to achieve a preset autonomous travel speed.

When the manual travel mode is set, the work control unit 46 controls the work machine 3 according to the operation of various operation tools provided in the cabin 12 to perform the plowing work by the work machine 3 with respect to the field. Moreover, when the autonomous travel mode is set, the work control unit 46 controls the work machine 3 according to a preset work setting to perform the plowing work by the work machine 3 with respect to the field.

For example, the work control unit 46 controls a solenoid valve provided between the lift cylinder 25 and the hydraulic pump of the transmission device 17 to control the lift cylinder 25, which performs a control that changes the height of the work machine 3 (work machine height) supported by the vehicle body 2. The work control unit 46, for example, is capable of changing the work machine height between a lowered position, which is the height when work is performed with respect to the field, and a raised position, which is higher than the lower position and is the height during travel. Furthermore, the work control unit 46 controls a solenoid valve provided between the rolling cylinder 27 and the hydraulic pump of the transmission device 17 to control the rolling cylinder 27, which enables the tilt posture in the left-right direction of the work machine 3, which is supported by the vehicle body 2, to be changed. In addition, the work control unit 46 controls the rotation speed (rotational velocity) of the PTO shaft 20, which enables the rotation speed (rotational velocity) of the tillage rotating shaft 32 and the plurality of tillage claws 33 to be changed.

The work machine state detection unit 47 detects the state of the work machine 3 (work machine state) based on the detection results of the various sensors provided in the vehicle body 2 and the detection results of the various sensors provided in the work machine 3. For example, the work machine state detection unit 47 detects the height of the work machine 3 (that is, the work machine height) with respect to the ground (soil surface) based on the detection result of the work machine height sensor 80 provided in the vehicle body 2, and detects the tilling of the work machine 3 (that is, the work machine depth), in which the tillage claws 33 enter the ground (soil), based on the work machine height. The work machine state detection unit 47 detects the tilt of the work machine 3 (that is, the work machine tilt) with respect to the ground (soil surface) based on the detection results of the vehicle body tilt sensor 81 and the work machine tilt sensor 82 provided in the vehicle body 2.

Furthermore, the work machine state detection unit 47 detects the open/closed state of the left and right side tillage units 3b based on the detection result of the state detection sensor 83 provided in the work machine 3. The work machine state detection unit 47 detects the rotation angle of the leveling plate 34 (that is, the leveling plate rotation angle) based on the detection result of the leveling plate rotation angle sensor 84 provided in the work machine 3, and also detects the finish level of the work based on the leveling plate rotation angle. The work machine state detection unit 47 detects the expanded state/stored state of the extended leveling plates 35 based on the detection result of the extended leveling plate sensor 85 provided in the work machine 3.

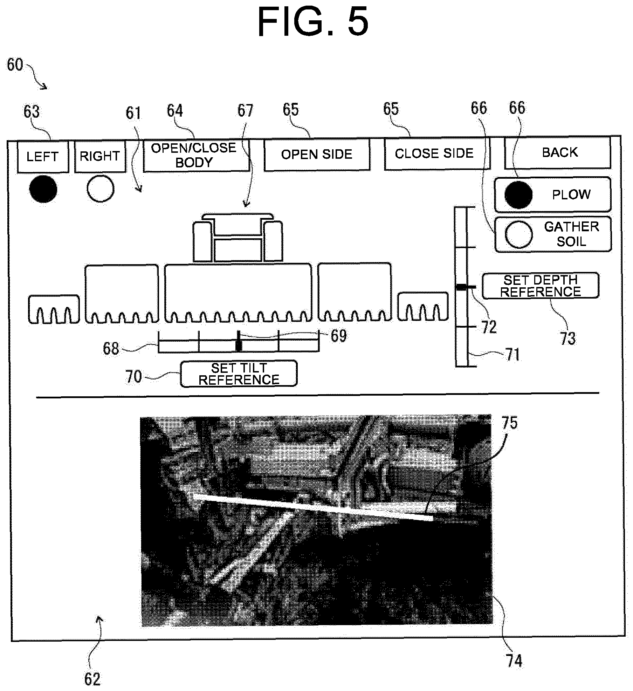

The display control unit 48 controls the display device 14 to display various display screens. For example, as shown in FIG. 5 to FIG. 7, the display control unit 48 displays on the display device 14 a state confirmation screen 60 for displaying the work machine state of the work machine 3. The display control unit 48 may display the state confirmation screen 60 before starting the work travel, or during execution of the work travel.

The display control unit 48 displays simultaneously, on the state confirmation screen 60, a first display area 61 that displays the work machine state of the work machine 3 detected by the work machine state detection unit 47, and a second display area 62 that displays an image captured by the imaging unit 28. The display control unit 48, for example, displays the first display area 61 and the second display area 62 on the state confirmation screen 60 side-by-side in the up-down direction on a single screen.

Furthermore, the display control unit 48 displays, in an operable manner on the state confirmation screen 60, an operation button 63 that is operated for individually operating/stopping the left and right side tillage units 3b, an operation button 64 that is operated for simultaneously switching the left and right side tillage units 3b between the open state/closed state, an operation button 65 that is operated for simultaneously switching the extended leveling plates 35 between the expanded state/stored state, and a work selection button 66 for selecting plowing work or soil gathering work as the work performed by the work machine 3.

The display control unit 48 displays the operating/stopping of each of the side tillage units 3b by the illumination/non-illumination of a light or an icon or the like, such that the states can be distinguished. Furthermore, the display control unit 48 displays the open state/closed state of the side tillage units 3b by the illumination/non-illumination of a light or an icon or the like, such that the states can be distinguished. Moreover, the display control unit 48 may display the work type of the work selected by the work selection button 66. For example, the work type is written on the work selection button 66, and the selected state of the work selection button 66 is indicated by illumination of a light, while the unselected state is indicated by non-illumination of a light.

The display control unit 48 displays, in the first display area 61, an illustration 67 that schematically illustrates the work machine 3. The illustration 67 is displayed so as to correspond to the work machine state of the work machine 3 detected by the work machine state detection unit 47. The display control unit 48 displays the illustration 67 of the work machine 3 so as to reflect the depth of the work machine 3 according to the detection result of the work machine depth from the work machine state detection unit 47. The display control unit 48 displays the illustration 67 of the work machine 3 so as to reflect the tilt of the work machine 3 according to the detection result of the work machine tilt from the work machine state detection unit 47. The display control unit 48 displays in the illustration 67 of the work machine 3 the open state or the closed state of the left and right side tillage units 3b according to the detection result of the open/closed state of the left and right side tillage units 3b from the work machine state detection unit 47. The display control unit 48 displays in the illustration 67 of the work machine 3 the expanded state or the stored state of the left and right extended leveling plates 35 according to the detection result of the expanded state/stored state of the left and right extended leveling plates 35 from the work machine state detection unit 47.

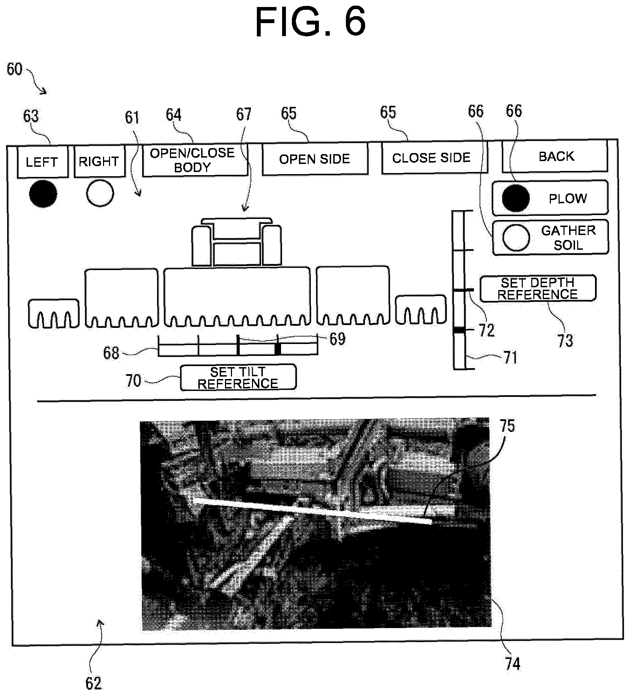

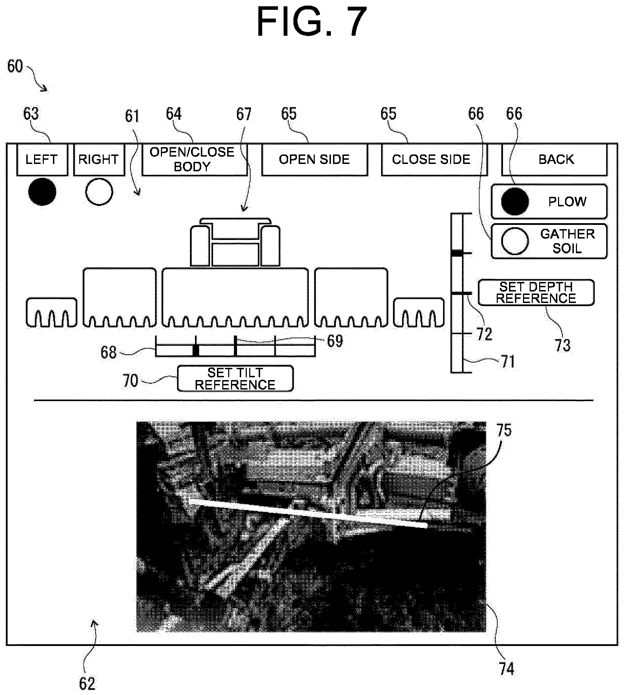

For example, the display control unit 48 displays in the first display area 61, as the work machine state of the work machine 3, a tilt meter 68 that displays the work machine tilt based on the detection result of the work machine tilt sensor 82 as a long shape in the left-right direction below the illustration 67 of the work machine 3. The tilt meter 68 displays a tilt reference 69 at the center as reference information serving as a reference of the work machine tilt, and shows the amount of the work machine tilt with respect to the tilt reference 69 by the distance from the tilt reference 69. For example, as shown in FIG. 6, when the tilt meter 68 is displaced to the right side, the work machine 3 is downwardly displaced to the right. On the other hand, as shown in FIG. 7, when the tilt meter 68 is displaced to the left side, the work machine 3 is downwardly displaced to the left. Moreover, the display control unit 48 displays, in an operable manner in the first display area 61, a tilt reference setting button 70 for setting the tilt reference 69 of the work machine tilt of the work machine 3. The tilt reference 69 of the work machine tilt of the work machine 3 is set according to an operation performed with respect to the tilt reference setting button 70.

Furthermore, the display control unit 48 displays in the first display area 61, as the work machine state of the work machine 3, a depth meter 71 that displays the work machine depth based on the detection result of the work machine height sensor 80 as a long shape in the up-down direction on the right side (or left side) of the illustration 67 of the work machine 3. The depth meter 71 displays a depth reference 72 at the center as reference information serving as a reference of the work machine depth, and shows the amount of the work machine depth with respect to the depth reference 72 by the distance from the depth reference 72. For example, as shown in FIG. 6, when the depth meter 71 is displaced to the lower side, the work machine 3 is plowing deeper than the target depth. On the other hand, as shown in FIG. 7, when the height meter 71 is displaced to the upper side, the work machine 3 is plowing shallower than the target depth. Moreover, the display control unit 48 displays, in an operable manner in the first display area 61, a depth reference setting button 73 for setting the depth reference 72 of the work machine depth of the work machine 3. The depth reference 72 of the work machine depth of the work machine 3 is set according to an operation performed with respect to the depth reference setting button 73.

The display control unit 48 displays, in the second display area 62, a work image 74 captured by the first imaging device 28a of the imaging unit 28. The display control unit 48 may display in an operable manner an imaging operation portion that operates the imaging direction and the like of the imaging unit 28. Furthermore, the display control unit 48 displays, as reference information serving as a reference of the work machine state, a reference line 75 showing the work machine depth and the work machine tilt of the work machine 3 superimposed on the position corresponding to the work machine 3 on the work image 74.

For example, the display control unit 48 performs image analysis and the like based on the work image 74 captured before starting the work travel of the tractor 1 or before starting operation of the work machine 3. Then, the display control unit 48 determines the reference line 75 of the work machine 3 by extracting feature points of the work machine 3 in the work image 74, and acquires the position information of the reference line 75 in the work image 74. Further, the display control unit 48 displays the reference line 75 superimposed on the work image 74 based on the acquired position information. Thereafter, even when the work image 74 is updated and the depth or tilt of the work machine 3 fluctuates, the reference line 75 is immovably displayed based on the position information. Alternatively, the display control unit 48 may set the reference line 75 according to an arbitrary manual operation performed by an operator. The display control unit 48 may update the reference line 75 when the tilt reference setting button 70 or the depth reference setting button 73 are operated.

Next, the mobile terminal 5 will be described. The mobile terminal 5 is one of the components of the tractor 1, and is a terminal capable of remotely operating the tractor 1. For example, the mobile terminal 5 is configured by a tablet terminal provided with a touch panel, or a laptop personal computer. An operation device equivalent to the mobile terminal 5 may be provided in the cabin 12. In the present invention, a work system is configured by the tractor 1 and the mobile terminal 5.

As shown in FIG. 4, the mobile terminal 5 includes a terminal side control device 50 configured by a computer such as a CPU. The terminal side control device 50 is connected to a terminal side storage unit 51 such as a ROM, a RAM, a hard disk drive, or a flash memory, and to a terminal side communication unit 52 that performs communication with an external instrument. Furthermore, the mobile terminal 5 includes a display unit 53, such as a touch panel or a monitor for displaying various information and outputting the various information to an operator, and also includes an input unit 54 such as a touch panel or an operation key for receiving an input operation of various information from an operator.

The terminal side storage unit 51 stores a program and data for controlling various components and various functions of the mobile terminal 5. The terminal side control device 50 executes arithmetic processing based on the program and the data stored in the terminal side storage unit 51, so that the various components and the various functions of the mobile terminal 5 are controlled. The terminal side storage unit 51 stores field information and an autonomous travel route of a field, which is the work target of the tractor 1.

The terminal side communication unit 52 is communicatively connected to the communication unit 41 of the tractor 1 via a wireless communication antenna. The terminal side control device 50 controls the terminal side communication unit 52 to perform wireless communication with the tractor 1, and transmits and receives various information to and from the tractor 1.

The terminal side control device 50 operates as a field selection unit 55, a route creation unit 56, and a terminal side display control unit 57 by executing the program stored in the terminal side storage unit 51. The route creation unit 56 and the terminal side display control unit 57 are components that realize the display step of the work method according to the present invention.

The field selection unit 55 manually or automatically selects the field that becomes the work target. For example, the field selection unit 55 displays a field selection screen (not illustrated) on the display unit 53 for selecting a field that becomes the work target. The field selection screen makes it possible to select the field corresponding to the field information that is already stored in the terminal side storage unit 51. When one of the fields is selected on the field selection screen in response to a manual operation, the field selection unit 55 selects the field subjected to the selection operation as the work target, reads the field information corresponding to the selected field from the terminal side storage unit 51, and outputs the field information to the tractor 1 via the terminal side communication unit 52.

The field selection screen also allows an operation to create a new field. When an operation to create a new field is performed on the field selection screen, the field selection unit 55 selects a new field at the own vehicle position of the tractor 1 as the work target. Then, when the tractor 1 circulates along the outer peripheral shape of the new field and performs outer periphery travel, the field selection unit 55 receives from the tractor 1 the own vehicle position of the tractor 1 as positioned by the positioning unit 15 of the tractor 1, and records the position information of the outer peripheral shape of the new field and the position information of the route of the outer periphery travel. The field selection unit 55 creates the field outline of the new field based on the position information acquired in the outer periphery travel, creates field information including the field outline and stores the field information in the terminal side storage unit 51, and transmits the field information to the tractor 1 via the terminal side communication unit 52.

The route creation unit 56 creates the autonomous travel route 78 for autonomous travel of the field selected by the field selection unit 55, stores the autonomous travel route in the terminal side storage unit 51, and transmits the autonomous travel route to the tractor 1 via the terminal side communication unit 52. The autonomous travel route includes travel information relating to the autonomous travel and work information relating to the plowing work. The travel information may include, in addition to the travel positions in the field, the traveling direction and the vehicle speed setting at each travel position. The work information may include information relating to the work at each travel position, such as whether plowing is activated or stopped, the rotation speed (rotational velocity) and the plowing height (depth). The route creation unit 56 creates, in the field, a plurality of straight routes in which plowing work is performed while traveling in the forward direction according to a travel pattern (reciprocating travel or circulating travel) selected by an operation of the mobile terminal 5, and creates an autonomous travel route by combining the plurality of straight routes and a plurality of turning routes that connect the straight routes.

When the autonomous travel mode is set, the terminal side display control unit 57 controls the display unit 53 to display a work screen for performing autonomous travel in the field. The terminal side display control unit 57 displays on the work screen a map panel for displaying information about the field on which autonomous travel is performed and the travel route, and a work button for performing an instruction operation that starts or stops autonomous travel.

The terminal side display control unit 57 may display on the display unit 53 the same screen as the state confirmation screen 60 described above when the tractor 1 performs work travel. In this case, the terminal side display control unit 57 receives the required information to display on the state confirmation screen 60 from the tractor 1 via the terminal side communication unit 52. Note that, when the tractor 1 performs autonomous travel, the terminal side display control unit 57 may display the work screen and the same screen as the state confirmation screen 60 on the display unit 53 such that the screens are switched in response to an arbitrary manual operation by an operator.

As described above, according to the present embodiment, the tractor 1, which is a work vehicle, includes the work machine 3, the control device 13, and the imaging unit 28. The control device 13 operates as the work machine state detection unit 47 (detection unit) and the display control unit 48. The work machine state detection unit 47 detects a work machine state relating to the work machine 3. The imaging unit 28 acquires a work image 74 by imaging the status of work performed by the work machine 3. The display control unit 48 displays simultaneously on a display device 14 a first display area 61 that displays the detected work machine state, and a second display area 62 that displays the acquired work image 74.

In other words, a work method of the present invention of the tractor 1, which is a work vehicle provided with the work machine 3, includes: a detection step for detecting a work machine state relating to the work machine 3; an imaging step for imaging a status of work performed by the work machine 3, and acquiring a work image 74; and a display step for displaying simultaneously a first display area 61 that displays the detected work machine state, and a second display area 62 that displays the acquired work image 74.

This allows the tractor 1 to simultaneously display the work machine state of the work machine 3, such as a plowing harrow, and the work image 74 captures the status of work performed by the work machine 3. Further, because an operator is capable of confirming both pieces of information at the same time, the work monitoring efficiency of the tractor 1 improves, and the operability of the tractor 1 can be improved.

Furthermore, according to the present embodiment, the display control unit 48 displays the first display area 61 and the second display area 62 side-by-side in the up-down direction on a single screen.

Alternatively, the display control unit 48 displays the first display area 61 and the second display area 62 side-by-side in the left-right direction on a single screen.

This makes it easier to compare the work machine state of the work machine 3 and the work image 74, which enables the work monitoring efficiency of the tractor 1 to be improved, and the operability of the tractor 1 to be improved.

Furthermore, according to the present embodiment, the imaging unit 28 captures the work image 74 by imaging the work machine 3 and the surrounding area thereof.

This makes it possible to confirm the status of work performed by the work machine 3 with more certainty.

Moreover, according to the present embodiment, the display control unit 48 displays the illustration 67 that illustrates the work machine 3 in the first display area 61 so as to correspond to the work machine state.

This makes it possible to more easily confirm the work machine state by visually observing the illustration 67 and the surrounding area thereof.

In addition, according to the present embodiment, the display control unit 48 displays in the first display area 61, as the work machine state, at least one of the work machine depth of the work machine 3, the work machine tilt with respect to the horizontal direction of the work machine 3, the open/closed state of the work machine 3, and the work type performed by the work machine 3.

This makes it possible to confirm various work machine states. The display control unit 48 is also capable of displaying a work machine state selected according to an arbitrary operation performed by an operator.

Furthermore, according to the present embodiment, the display control unit 48 enables reference information that serves as a reference of the work machine state to be set, while also simultaneously displaying the work machine state and the reference information in the first display area 61, and displaying the reference information superimposed on the work image 74.

This allows an operator to more easily confirm the work machine state and the status of work with respect to reference information of the work machine 3, and correct the work while confirming the reference information.

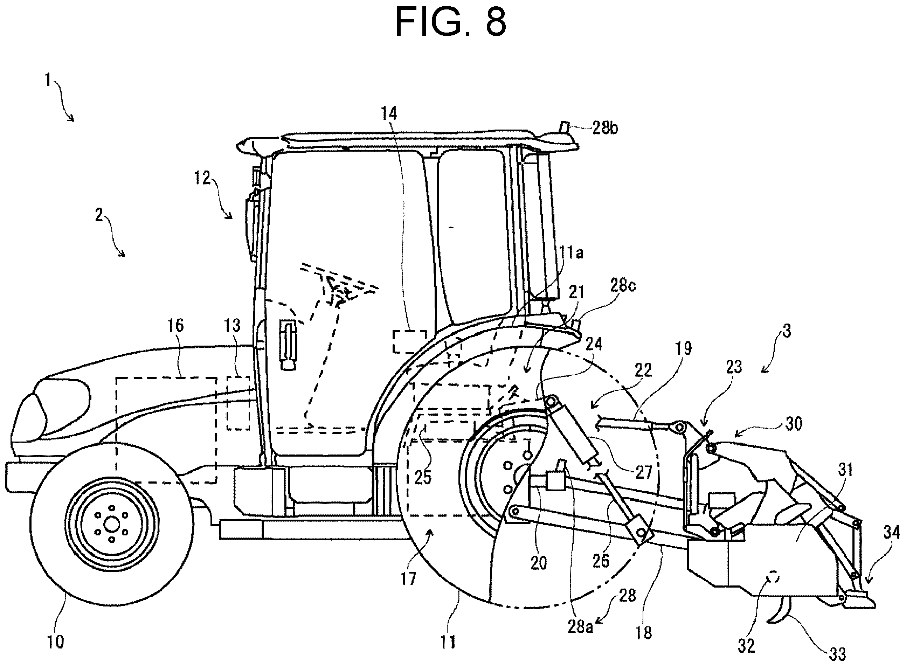

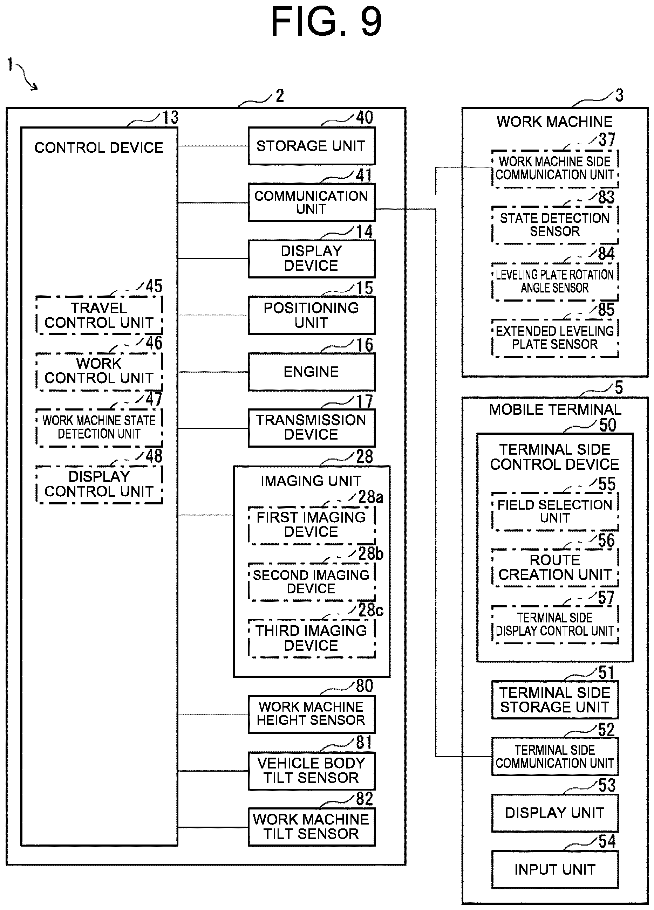

In the embodiment described above, an example has been described in which the vehicle body 2 is provided with the first imaging device 28a on the PTO shaft cover of the PTO shaft 20 as the imaging unit 28 that images the status of work performed by the work machine 3. However, the present invention is not limited to this example. As shown in FIG. 8 and FIG. 9, the imaging unit 28 may include two or more imaging devices, such as the first imaging device 28a, a second imaging device 28b, and a third imaging device 28c. Note that, in FIG. 8 and FIG. 9, an example is illustrated in which the vehicle body 2 is provided with the first imaging device 28a, the second imaging device 28b, and the third imaging device 28c. However, two or more imaging devices may be appropriately selected from among the first imaging device 28a, the second imaging device 28b, and the third imaging device 28c as necessary.

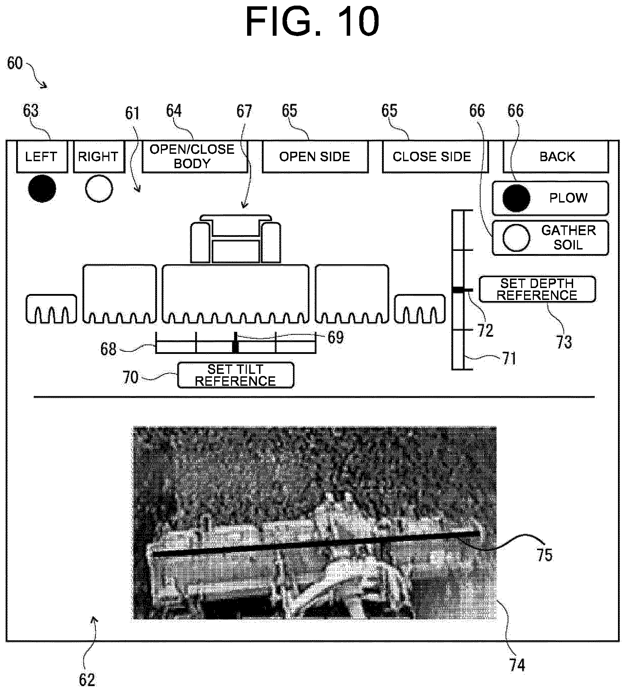

For example, in another example, the vehicle body 2 may have, in addition to the first imaging device 28a, or instead of the first imaging device 28a, a second imaging device 28b provided in the cabin 12. The second imaging device 28b images the overall status of work performed by the work machine 3. Specifically, the second imaging device 28b simultaneously images, inside the angle of view, both the entire work machine 3 and the surrounding area of the soil on which the work machine 3 is performing work. The work image 74 captured from the second imaging device 28b of the cabin 12 is, as shown in FIG. 10, displayed by the display control unit 48 in the second display area 62 of the state confirmation screen 60. The second imaging device 28b may be provided having the imaging direction oriented toward the lower-rear direction from the rear side of the upper portion of the cabin 12. However, the imaging direction may also be controlled by the control device 13.

Furthermore, in another example, the vehicle body 2 may be provided with, in addition to the first imaging device 28a and/or the second imaging device 28b, or instead of the first imaging device 28a and/or the second imaging device 28b, a left and right pair of third imaging devices 28c on left and right fenders 11a that each cover the left and right rear wheels 11. The pair of left and right third imaging devices 28c image more closely the status of work performed on the left side or the right side of the work machine 3, and more specifically, simultaneously image, inside the angle of view, both the left or right side of the work machine 3 and the surrounding area of the soil on which the work machine 3 is performing work. The work image 74 captured from the third imaging device 28c on each fender 11a is displayed by the display control unit 48 in the second display area 62 of the state confirmation screen 60. The third imaging devices 28c may be provided having the imaging direction oriented toward the lower-rear direction from the rear side of the upper portion of each fender 11a. However, the imaging direction may also be controlled by the control device 13.

When the first imaging device 28a and the second imaging device 28b are provided, the display control unit 48 may simultaneously display in the second display area 62, as the work image 74, each of a first work image captured by the first imaging device 28a and a second work image captured by the second imaging device 28b. It is also possible to display, among the work images 74, one or more work images 74 selected according to an arbitrary operation by an operator.

When the first imaging device 28a and the pair of left and right third imaging devices 28c are provided, the display control unit 48 may display in the second display area 62, as the work image 74, each of a first work image captured by the first imaging device 28a and a left and right pair of third work images captured by the left and right pair of third imaging devices 28c. It is also possible to display, among the work images 74, one or more work images 74 selected according to an arbitrary operation by an operator.

When the first imaging device 28a, the second imaging device 28b, and the pair of left and right third imaging devices 28c are provided, the display control unit 48 may simultaneously display in the second display area 62, as the work image 74, each of a first work image captured by the first imaging device 28a, a second work image captured by the second imaging device 28b, and a left and right pair of third work images captured by the left and right pair of third imaging devices 28c. It is also possible to display, among the work images 74, one or more work images 74 selected according to an arbitrary operation by an operator.

In the embodiment described above, an example has been described in which the display control unit 48 displays the first display area 61 on the upper side of the state confirmation screen 60, and the second display area 62 on the lower side. However, the present invention is not limited to this. For example, in another example, the display control unit 48 may display the first display area 61 on the lower side of the state confirmation screen 60, and the second display area 62 on the upper side. Alternatively, in another example, the display control unit 48 may display the first display area 61 and the second display area 62 on the state confirmation screen 60 side-by-side in the left-right direction on a single screen. For example, the first display area 61 may be displayed on the right side (or the left side), and the second display area 62 may be displayed on the left side (or the right side).

Furthermore, when the first display area 61 and the second display area 62 are displayed side-by-side on a single screen on the state confirmation screen 60, and a selection operation that selects the first display area 61 is performed, the display control unit 48 may display only the first display area 61 or display the first display area 61 enlarged. Moreover, when a selection operation that selects the second display area 62 is performed, the display control unit 48 may display only the second display area 62 or display the second display area 62 enlarged.

Also, when only the first display area 61 is mainly displayed on a single screen of the state confirmation screen 60 and a selection operation corresponding to the imaging unit 28 is performed, the display control unit 48 may display the second display area 62 in a pop-up, or may switch to a single-screen display in which the first display area 61 and the second display area 62 are displayed side-by-side. At this time, when a selection operation corresponding to the first imaging device 28a (a selection operation near the installation location of the first imaging device 28a or near the imaging range of the first imaging device 28a) is performed in the illustration 67 of the work machine 3 in the first display area 61, the display control unit 48 displays the first work image captured by the first imaging device 28a in the second display area 62. Furthermore, when a selection operation corresponding to the second imaging device 28b (a selection operation near the installation location of the second imaging device 28b or near the imaging range of the second imaging device 28b) is performed in the illustration 67 of the work machine 3 in the first display area 61, the display control unit 48 displays the second work image captured by the second imaging device 28b in the second display area 62. Moreover, when a selection operation corresponding to the third imaging devices 28c (a selection operation near the installation location of the third imaging devices 28c or near the imaging range of the third imaging devices 28c) is performed in the illustration 67 of the work machine 3 in the first display area 61, the display control unit 48 displays the third work images captured by the third imaging devices 28c in the second display area 62.

In the embodiment described above, an example has been described in which the display control unit 48 displays on the state confirmation screen 60, as reference information serving as a reference of the work machine state, the tilt reference setting button 70 for setting the tilt reference 69 of the work machine tilt of the work machine 3, the depth reference setting button 73 for setting the depth reference 72 of the work machine depth of the work machine 3, and the reference line 75 that indicates the work machine depth and the work machine tilt of the work machine 3. However, the present invention is not limited to this example. For example, in another example, the display control unit 48 may display and enable setting of reference information serving as a reference for performing lifting control of the work machine 3, and reference information serving as a reference for performing drive control (operation control) of the work machine 3.

Furthermore, in the embodiment described above, an example has been described in which the display control unit 48 displays the tilt meter 68 and the tilt reference setting button 70 relating to the work machine tilt, and the depth meter 71 and the depth reference setting button 73 relating to the work machine depth so as to correspond to the illustration 67 of the work machine 3 in the first display area 61. However, the present invention is not limited to this example. For example, the display control unit 48 may display the tilt meter 68 and the tilt reference setting button 70 relating to the work machine tilt, and the depth meter 71 and the depth reference setting button 73 relating to the work machine depth so as to correspond to the work image 74 in the second display area 62.

In the embodiment described above, an example has been described in which the imaging unit 28 provides the first imaging device 28a, the second imaging device 28b, and the third imaging devices 28c that image the status of work performed by the work machine 3 on the vehicle body 2 side. For example, in another example, the imaging unit 28 may provide a work machine side imaging device on the work machine 3 side, and the work machine side communication unit 37 may transmit the captured work image to the control device 13 on the vehicle body 2 side. Then, the display control unit 48 may display the work image captured by the work machine side imaging device in the second display area 62 of the state confirmation screen 60.

In the embodiment described above, an example has been described in which the display control unit 48 displays, as the work machine state of the work machine 3, the work machine tilt using the tilt meter 68, and the work machine depth using the depth meter 71. However, the present invention is not limited to this example. For example, in another example, the display control unit 48 may show the work machine state of the work machine 3 such as the work machine tilt and the work machine depth using numerical values, as a plurality of levels, as a character display, or the like.

In the embodiment described above, an example has been described in which the tractor 1 includes a plowing harrow as the work machine 3 and performs plowing work. However, the present invention is not limited to this example. For example, in another example, the tractor 1 may include a rotary as the work machine 3 and perform tillage work, or include another work machine and be configured to perform other types of work.

Furthermore, in the embodiment described above, an example has been described in which the terminal side control device 50 of the mobile terminal 5 operates as the route creation unit 56. However, in another example, the route creation unit 56 may operate as a server capable of connecting to the work vehicle such as the tractor 1, or the mobile terminal 5 via a network. In this case, the route information generated by the server may be configured to be transmitted to the work vehicle such as the tractor 1, or the mobile terminal 5. Also, in another example, an external server may create the state confirmation screen 60 having the same functions as the display control unit 48 and transmit the state confirmation screen 60 to the work vehicle such as the tractor 1 and the mobile terminal 5. Alternatively, the state confirmation screen 60 may be displayed on a surveillance monitor at a monitoring center.

The present invention can be modified as appropriate to an extent not contradicting the gist or idea of the invention that can be read from the claims and the specification as a whole, and the work method, work vehicle and work system with such modifications are also included in the technical concept of the present invention.

### (Appendices to Invention)

Appended below is a summary of the invention extracted from the embodiment described above. The components and processing functions described in the appendices below may be selected and arbitrarily combined.

### <Appendix 1>

A work method of a work vehicle provided with a work machine, comprising: a detection step for detecting a work machine state relating to the work machine; an imaging step for imaging a status of work performed by the work machine, and acquiring a work image; and a display step for displaying simultaneously a first display area that displays the detected work machine state, and a second display area that displays the acquired work image.

### <Appendix 2>

The work method according to appendix 1, wherein the display step displays the first display area and the second display area side-by-side in an up-down direction on a single screen.

### <Appendix 3>

The work method according to appendix 1, wherein the display step displays the first display area and the second display area side-by-side in a left-right direction on a single screen.

### <Appendix 4>

The work method according to any one of appendices 1 to 3, wherein the imaging step images the work image by imaging the work machine and a surrounding area thereof.

### <Appendix 5>

The work method according to any one of appendices 1 to 4, wherein the display step displays the first display area such that an illustration that illustrates the work machine corresponds to the work machine state.

### <Appendix 6>

The work method according to any one of appendices 1 to 5, wherein the display step displays in the first display area, as the work machine state, at least one of a work machine depth of the work machine, a work machine tilt of the work machine, an open/closed state of the work machine, and a work type performed by the work machine.

### <Appendix 7>

The work method according to any one of appendices 1 to 6, wherein the display step enables reference information that serves as a reference of the work machine state to be set, while also simultaneously displaying the work machine state and the reference information in the first display area, and displaying the reference information superimposed on the work image.

### <Appendix 8>

A work vehicle provided with a work machine, comprising: a detection unit that detects a work machine state relating to the work machine; an imaging unit that images a status of work performed by the work machine, and acquires a work image; and a display control unit that displays simultaneously on a display device a first display area that displays the detected work machine state, and a second display area that displays the acquired work image.

### <Appendix 9>

The work vehicle according to appendix 8, wherein the display control unit displays the first display area and the second display area side-by-side in an up-down direction on a single screen.

### <Appendix 10>

The work vehicle according to appendix 8, wherein the display control unit displays the first display area and the second display area side-by-side in a left-right direction on a single screen.

### <Appendix 11>

The work vehicle according to any one of appendices 8 to 10, wherein the imaging unit images the work image by imaging the work machine and a surrounding area thereof.

### <Appendix 12>

The work vehicle according to any one of appendices 8 to 11, wherein the display control unit displays the first display area such that an illustration that illustrates the work machine corresponds to the work machine state.

### <Appendix 13>

The work vehicle according to any one of appendices 8 to 12, wherein the display control unit displays in the first display area, as the work machine state, at least one of a work machine depth of the work machine, a work machine tilt of the work machine, an open/closed state of the work machine, and a work type performed by the work machine.

### <Appendix 14>

The work vehicle according to any one of appendices 8 to 13, wherein the display control unit enables reference information that serves as a reference of the work machine state to be set, while also simultaneously displaying the work machine state and the reference information in the first display area, and displaying the reference information superimposed on the work image.

### <Appendix 15>

A work system of a work vehicle provided with a work machine, comprising: a detection unit that detects a work machine state relating to the work machine; an imaging unit that images a status of work performed by the work machine, and acquires a work image; and a display control unit that displays simultaneously on a display device a first display area that displays the detected work machine state, and a second display area that displays the acquired work image.

### <Appendix 16>

The work system according to appendix 15, wherein the display control unit displays the first display area and the second display area side-by-side in an up-down direction on a single screen.

### <Appendix 17>

The work system according to appendix 15, wherein the display control unit displays the first display area and the second display area side-by-side in a left-right direction on a single screen.

### <Appendix 18>

The work system according to any one of appendices 15 to 17, wherein the imaging unit images the work image by imaging the work machine and a surrounding area thereof.

### <Appendix 19>

The work system according to any one of appendices 15 to 18, wherein the display control unit displays the first display area such that an illustration that illustrates the work machine corresponds to the work machine state.

### <Appendix 20>

The work system according to any one of appendices 15 to 19, wherein the display control unit displays in the first display area, as the work machine state, at least one of a work machine depth of the work machine, a work machine tilt of the work machine, an open/closed state of the work machine, and a work type performed by the work machine.

### <Appendix 21>

The work system according to any one of appendices 15 to 20, wherein the display control unit enables reference information that serves as a reference of the work machine state to be set, while also simultaneously displaying the work machine state and the reference information in the first display area, and displaying the reference information superimposed on the work image.

### REFERENCE SIGNS LIST

1 Tractor (work vehicle)
3 Work machine
13 Control device
14 Display device
28 Imaging unit
28a First imaging device
28b Second imaging device
28c Third imaging device
47 Work machine state detection unit (detection unit)
48 Display control unit
60 State confirmation screen
61 First display area
62 Second display area
67 Illustration
74 Work image

## Claims

1. A work method of a work vehicle provided with a work machine, comprising:
a detection step for detecting a work machine state relating to the work machine;
an imaging step for imaging a status of work performed by the work machine, and acquiring a work image; and
a display step for displaying simultaneously a first display area that displays the detected work machine state, and a second display area that displays the acquired work image.

2. The work method according to claim 1, wherein
the display step displays the first display area and the second display area side-by-side in an up-down direction on a single screen.

3. The work method according to claim 1, wherein
the display step displays the first display area and the second display area side-by-side in a left-right direction on a single screen.

4. The work method according to any one of claims 1 to 3, wherein
the imaging step images the work image by imaging the work machine and a surrounding area thereof.

5. The work method according to any one of claims 1 to 3, wherein
the display step displays the first display area such that an illustration that illustrates the work machine corresponds to the work machine state.

6. The work method according to any one of claims 1 to 3, wherein
the display step displays in the first display area, as the work machine state, at least one of a work machine depth of the work machine, a work machine tilt of the work machine, an open/closed state of the work machine, and a work type performed by the work machine.

7. The work method according to any one of claims 1 to 3, wherein
the display step enables reference information that serves as a reference of the work machine state to be set, while also simultaneously displaying the work machine state and the reference information in the first display area, and displaying the reference information superimposed on the work image.

8. A work vehicle provided with a work machine, comprising:
a detection unit that detects a work machine state relating to the work machine;
an imaging unit that images a status of work performed by the work machine, and acquires a work image; and
a display control unit that displays simultaneously on a display device a first display area that displays the detected work machine state, and a second display area that displays the acquired work image.

9. A work system of a work vehicle provided with a work machine, comprising:
a detection unit that detects a work machine state relating to the work machine;
an imaging unit that images a status of work performed by the work machine, and acquires a work image; and
a display control unit that displays simultaneously on a display device a first display area that displays the detected work machine state, and a second display area that displays the acquired work image.
